# EUROPEAN PATENT APPLICATION

(11) **EP 3 982 056 A1**
(43) Date of publication of application: **13.04.2022**
(21) Application number: 20200296.0
(22) Date of filing: 06.10.2020
(51) Int. Cl.: F24H 3/00, F24H 3/02, F24H 9/18, F24H 9/20, F16L 53/37, F24C 15/32, F24F 13/02, H05B 3/34, H05B 3/58

(54) **AIR SYSTEM COMPRISING AIR DUCTS WITH INTEGRATED ELECTRICALLY CONDUCTIVE ELEMENTS**

(71) Applicant: DEC Technologies B.V., 7547 RD Enschede (NL)
(72) Inventor: DE GOEIJ, Theodorus Anthonius, 7547 RD ENSCHEDE (NL); GÜL, Siraç, 7547 RD ENSCHEDE (NL)
(74) Representative: van Dam, Vincent

(57) **Abstract**

The present invention relates to an air system comprising one or more air ducts with electrically conductive elements integrated with the walls of said air ducts, in particular for purposes of air cleaning, heating, refrigeration, ventilation or air conditioning in a building or means of transport. The invention also relates to the use of electrically conductive elements integrated with the wall of one or more air ducts of an air system, for insulation of walls of said air ducts, and/or for communication between functional components of an air system and/or control of functional components of an air system and/or disinfection of the air flowing through the air ducts and/or heating of the air flowing through the air ducts.

## Description

The present invention relates to an air system comprising one or more air ducts with electrically conductive elements integrated with the walls of said air ducts, in particular for purposes of air cleaning, heating, refrigeration, ventilation or air conditioning in a building or means of transport. The invention also relates to the use of electrically conductive elements integrated with the wall of one or more air ducts of an air system, for insulation of walls of said air ducts, and/or for communication between functional components of an air system, and/or control of functional components of an air system, and/or for disinfection of air flowing through the air ducts, and/or for heating air flowing through the air ducts.

### Introduction

Air systems require communication between components, which often requires additional equipment and cabling. This on its turn occupies space, which is often limited, in particular in view of the fact that it is desirable that air system components are hidden from sight for esthetic purposes.

Further in this respect, especially when temperatures of air passing through the ducts of an air system differ from the temperatures of surroundings, insulation of the air ducts with an insulation medium may be necessary, which also occupies space. Furthermore, insulation may be complicated to arrange, especially in the small spaces that often accommodate air ducts of air systems.

Further, heating and/or disinfection of air flowing in an air system also requires space and equipment.

### Description of the invention

The inventor has now found a way to overcome these problems by the provision of the present invention.

The present invention relates to an air system comprising functional components and at least one air duct between said functional components, wherein said air duct has a wall, wherein said wall comprises an integrated electrically conductive element in connection with a voltage source and extending between functional components.

The present invention is in one aspect based on the finding that using integrated electrically conductive elements in the walls of air ducts of an air system allows communication between functional components of an air system and/or control of functional components of an air system without effectively occupying space. The air system of the invention therefore does not require separate electric cabling between functional components of the air system. Moreover, as will be explained below, these electrically conductive elements also provide allow to influence temperature in the wall of ducts such that thermal bridges can be avoided and the use of an external insulation medium can be minimized. This way undesired condensation can be prevented. Furthermore, the generation of an electric field by the use of electrically conductive elements integrated in the wall can have a disinfecting effect om the air flowing through the air ducts. The electric field may cause conversion of oxygen into ozone, which has a disinfecting action. Furthermore, the generation of an electric field by the use of electrically conductive elements integrated with the wall can be used to heat the air flowing through the air ducts. In particular in view of the applications of heating and disinfection it is preferred that the air flow is kept low if the invention is used for these purposes.

In view of the above the invention also relates to the use of electrically conductive elements integrated with the wall of one or more air ducts of an air system, for
1) insulation of walls of said air ducts;
2) communication between functional components of an air system;
3 control of functional components of an air system; or
4) disinfection of the air flowing through the air ducts; or
5) heating of the air flowing through the air ducts
6) a combination of one or more of abovementioned uses 1), 2), 3), 4) or 5) in an air system. In particular the insulation (1) and heating (5) are achieved in combination.

In an embodiment the invention also relates to a method for insulation of walls of said air ducts with the air system as defined in this application.

In an embodiment the invention also relates to a method for insulation of walls of said air ducts with the air system as defined in this application.

In an embodiment the invention also relates to a method for communication between functional components in an air system as defined in this application.

In an embodiment the invention also relates to a method for controlling functional components of an air system as defined in this application.

In an embodiment the invention also relates to a method for disinfection of the air flowing through the air ducts of the air system as defined in this application.

In an embodiment the invention also relates to a method for heating the air flowing through the air ducts of the air system as defined in this application.

The above methods all comprise the step of applying an electric field over the electrically conductive elements integrated in the air duct walls in order to achieve the respective effect(s).

Air ducts for purposes of this invention serve to pass air between locations and usually have an air inlet and air outlet. The air ducts can be connected with functional components, for instance via their inlets or outlets. For this purpose ducts may be provided with integrated or separate connection elements for easy connecting the ducts and other parts to obtain an air system in accordance with the invention. Functional components may also be arranged in, along or branching off from the air ducts. Air ducts may be rigid ducts, semi-rigid ducts or flexible ducts, depending on their application. Ducts can have an oval, rectangular of circular cross-section or any other cross-section that is suitable.

The configuration of the air ducts may vary depending on the chosen application.

In case the application is directed to communication between functional components in an air system and/or controlling functional components of an air system it is preferred that the air ducts comprise a basis material of an electrically insulating material. That means this material is able to separate electrical conductive elements without passing current through it. Electrical conductive elements may be embedded or impregnated in said electrically insulating material. Material like plastics, such as PVC or rubber can for instance be used as electrical insulator material.

In case the application is directed to insulation of walls of said air ducts with the air system and/or heating the air flowing through the air ducts the configuration of the air ducts may be chosen such that the wall is electrically conductive to an extent that allows development of heat in the wall. This may for instance be realized by using a wall material containing electro conductive fibers, such as a non-woven material impregnated with carbon fibers. Alternatively, a duct may be made of a material that is electrically conductive by itself to an extent that allows development of heat.

In case flexible air ducts are used, it is preferred that these are reinforced. In a preferred embodiment the reinforcement also functions as electrically conductive element between functional components of the air system of the invention. This way the electrically conductive element functions as a reinforcement as well as a means to conduct electricity. In one embodiment therefore said air duct contains a reinforcement integrated with its wall, wherein said electrically conductive element is integrated with said reinforcement or wherein said reinforcement constitutes said electrically conductive element.

The reinforcement can also be used in the form of cables, wires or threads as first electrically conductive elements and in this way function as electrodes to create an electric field over second electrically conductive elements such as electrically conductive fibers dispersed throughout the walls. Such an embodiment is in particular useful for purposes of insulation, heating the air flowing through the ducts and/or disinfection of air flowing through the ducts.

A functional component in the context of this invention may be any component that has a function in an air system. It may be a component which requires electric energy to perform an action or which can be triggered by an electric signal. It may also be a component, such as an outlet or an inlet, which by itself does not require electric energy.

In an embodiment of the invention, the electrically conductive elements allow control of functional elements by means of electrical signaling. In this sense the electrically conductive elements allow communication between functional elements. In another aspect the electrically conductive elements allow control of functional elements by providing the required electricity in order to exert a function of a functional component.

In an embodiment, in an air system according to the invention said functional components comprise a first functional component which is a control device and a second functional component which is configured to exert an action based on input from said control device via an electric signal submitted via said electrically conductive elements.

Such a control device on its turn may be regulated from an outside source such as a computer or cell phone or the like.

The control device may also be a device that regulates the function of functional components based on feedback it obtains from one or more of such functional components.

It is preferred that the control device is configured to control multiple functional components to exert an action based on input from said control device via an electric signal submitted via said electrically conductive elements. The control device in this case functions as a central coordination point from which various functional components can be efficiently regulated. This efficiency is even more increased if the air system comprises a single control device configured to control multiple functional components to exert an action based on input from said control device via an electric signal submitted via said electrically conductive elements.

The said voltage source is suitably integrated with the control device.

The control device may be configured to send an electric signal to a functional element via the electrically conductive elements integrated in the air duct walls. A low voltage of 24 volt and lower will suffice in this respect, for instance 14 volt or lower, or 12 volt or lower. Therefore said voltage source may for instance be configured to deliver a voltage of 12 volt or less.

The action exerted by the functional element and triggered by the control device may obtain its required energy from another source than the electrically conductive elements integrated in the air duct walls, such as another source of electric energy. The energy may also be derived via another electrically conductive element integrated in the air duct walls.

An air duct may comprise a single electrically conductive element for one or more purpose, such as conferring an electric signal triggering an action of a functional component of the air system or providing the energy necessary of exerting said action or both.

An air duct may comprise multiple electrically conductive elements, each serving an own purpose. For instance one electrically conductive element may confer an electric signal triggering an action of a functional component of the air system, and another one provides the electric energy to effect this action. If the air duct comprises multiple electrically conductive elements they may be arranged parallel in the longitudinal direction of the air duct.

For instance, a control device may be in connection via one or more electrically conductive elements integrated in an air duct wall with a functional component that is a component that monitors the performance of a third functional component. When the third component performs such that its action or status needs adaptation an electric signal can be submitted to the control device via an electrically conductive element integrated with an air duct wall. The control device may then respond.

As an example the performance of said third component may require that its action needs to be upregulated or downregulated. In that case an electric signal can be submitted to the control device via the electrically conductive element. The control device may then respond, by returning an electric signal via the same or a separate electrically conductive element which causes the action of said third component to be upregulated or downregulated.

The same principle may apply to a valve as an example of such a third component. Such a valve may require regulation of its opening and closing state. In that case an electric signal can be submitted to the control device via the electrically conductive element when process parameters indicate that the valve need to be opened or closed. The control device may then respond, by returning an electric signal via the same or a separate electrically conductive element which causes the valve to be opened or closed.

It is also possible that a valve is directly controlled via said electrically conductive element by said control device. In other words, a valve may also be a second functional component in the context of this application.

In another embodiment a functional component may monitor the performance of a functional element to assess whether and when maintenance or replacement is required. In that case an electric signal can be submitted from a monitor to the control device via the electrically conductive element based on parameters. The control device may then indicate to the user which action is required: for instance replacement or maintenance. In this case the functional element may for instance be a filter.

The use of electrically conductive elements integrated with air duct walls of an air system can also be applied for prevention of thermal loss over the walls of said air ducts. In this respect, the invention also relates to the use of electrically conductive elements integrated with air ducts walls of an air system, for insulation of walls of said air ducts. In this case the electrically conductive element is configured for reducing heat transfer from the inside to the outside of the air duct or vice versa by means of electrical energy. The electrically conductive elements prevents thermal bridges across the air duct walls in this respect.

By the application of an electric field over the electrically conductive element by means of the voltage source heat is be generated in the air duct wall in which the electrically conductive element is integrated. This heat prevents heat loss from the inside of the air duct to the outside, in case the inside air in the air duct is warmer than the surroundings. This may suitably be the case if the air system is used for purposes of heating. On the other hand, heat prevents heat entry from the outside of the air duct to the inside, in case the inside air in the air duct is colder than the surroundings. This may suitably be the case if the air system is used for purposes of cooling, such as an air conditioning system.

Further in view of this, the generation of an electric field by the use of electrically conductive elements integrated with the wall of an air duct can have a heating effect om the air flowing through it. This allows to heat the air flowing through the air ducts in an uniform fashion without the necessity for expensive equipment for heating the air.

In general, low voltages suffice for establishing the abovementioned insulation or heating properties. Therefore also in this respect, the voltage source may suitably be configured to deliver a voltage of 24 volt or less, such as 14 volt or less, or even 12 volt or less.

Furthermore, under the same conditions the generation of an electric field by the use of electrically conductive elements integrated with the wall of an air duct can have a disinfecting effect om the air flowing through it. The electric field may cause conversion of oxygen into ozone, which as a disinfecting action. Therefore, the invention also relates to the use of electrically conductive elements integrated with air ducts walls of an air system for disinfection of the air flowing through the air ducts.

The air ducts for purposes of this invention comprise an electrically conductive element integrated with their wall. The electrically conductive element(s) may be integrated on the inner surface or outer surface of the air duct wall or within the air duct wall, or a combination thereof.

It is possible to use multiple electrically conductive elements at different positions with regard to the wall cross-section, for instance on the outer and inner surface of the wall. This allows regulation of temperatures at these positions by applying a different voltage to the different electrically conductive elements, wherein a higher voltage results in higher temperature and a lower voltage results in a lower temperature.

As mentioned above, said air ducts may contain a reinforcement, wherein said electrically conductive element is integrated with said reinforcement or wherein said reinforcement constitutes said electrically conductive element. It is preferred in this respect that the reinforcement is a spiral reinforcement. Such a spiral reinforcement can be seen as a reinforcing coil member extending over the length of the cylindrical body of the duct in a helical manner. Such spiral reinforcements are commonly used in flexible ducts. Of course, also in rigid or semi-rigid ducts spiral electrically conductive elements may be used. If the air duct comprises multiple electrically conductive elements, they may be arranged parallel in the longitudinal direction in parallel coils. A spiral arrangement of the electrically conductive element(s) results in large coverage of the duct wall, which allows in uniform local temperature increase all over the wall area of ducts. This is on its turn is advantageous for the insulation properties of the electrically conductive element(s).

For the same reason it may also be preferred that an air duct contains an electrically conductive wall in which the electrically conductive element covers the full wall area. This allows uniform local temperature increase all over the wall area and consequential advantage for the insulation properties of the electrically conductive element(s) .

The electrically conductive element may be integrated in an air duct wall in any suitable form. This includes wiring, liner layers applied on the surface of the wall, or a conductive wall layer on the outer surface, inner surface or between other wall layers.

In a preferred embodiment the air duct wall comprises electrically conductive fibers as electro conductive material. Any electrically conductive material will be suitable for purposes of the invention, including conductive metals and nonmetallic conductors such as carbon (graphite) and conductive polymers. The use of fibers ensures an uniform covering of the walls with electrically conductive which is in particular advantageous in view of insulation, heating and/or disinfecting effects.

In a preferred embodiment the electrically conductive wall comprises carbon (or graphite) fibers as electrically conductive material. This material is in particularly suitable to realize the effects of the present invention, and is safe and easy in use.

In a particularly preferred embodiment hereof the air duct wall contains a layer of non-woven fabric impregnated with electrically conductive fibers so as to function as electrically conductive element. This allows maximal flexibility, coverage of the full wall area with advantageous effects for the insulation, heating and/or disinfecting properties of the electrically conductive element(s) and allows signaling and control of functional elements. Moreover this material can be designed as fire resistant material, is safe in use and can be easily processed, maintained and/or replaced. Fire resistance can also be improved by using additives for this purpose.

Alternatively, the air duct contains an electrically conductive wall as electrically conductive element wherein said electrically conductive wall is made of a plastic impregnated with fiber so as to function as an electrically conductive element in the context of this invention. Also this allows coverage of the full wall area with advantageous effects for the insulation and/or disinfecting properties of the electrically conductive element(s) and allows signaling and control of functional elements. Such air ducts can be made by extruding plastics with electrically conductive fibers of any suitable electrically conductive material, for instance using polyethylene, polypropylene or polyurethane granules with carbon fibers as starting material.

In a preferred embodiment for purposes of insulation, or heating and/or disinfection of the air in the ducts, the air ducts comprise reinforcement wires integrated with the wall and arranged in parallel coils distributed at a distance of each other along the pitch of the duct, wherein the duct wall comprises electrically conductive fibers distributed in the wall, wherein the reinforcement wires are configured as electrodes capable of forming an electric field over said fibers. This way electrically conductive fibers are distributed between the coils. The parallel coils can be positioned within the wall or on the inner or outer surface. The electrical insulator material can for instance be a plastic such as polyurethane or polyethylene, or a non-woven fabric. The fibers can be of any electro conductive material, for instance graphite. In an exemplary embodiment hereof the wall of an air duct is made of or comprises an electrical insulator material, for instance comprising or consisting of a non-woven fabric or a plastic. This electrical insulator can be made a conductive composite material by the impregnation of a conductive material, preferably fibers, such as carbon fibers. With this composite material an air duct can be produced, for instance by extrusion, with multiple separate reinforcements, such as two reinforcements. These reinforcements can be arranged in parallel coils uniformly distributed along the pitch of the duct. A spiral arrangement of the reinforcements results in large coverage of the duct wall, which allows in uniform local temperature distribution all over the wall area of ducts. An electric field can be applied to these reinforcements, which due to the impregnation of the wall with electrically conductive fibers results in uniform heating of the duct along the full length of the duct. In line with this, uniform heating and/or disinfection of air flowing in the air ducts can be obtained.

The air system in the context of this invention may be a system in a building or mean of transport. Such means of transport include cars, planes, boats, trucks etc. Without limitation the air system may be an air cleaning system, heating system, refrigeration system or air conditioning system.

### Exemplary embodiment

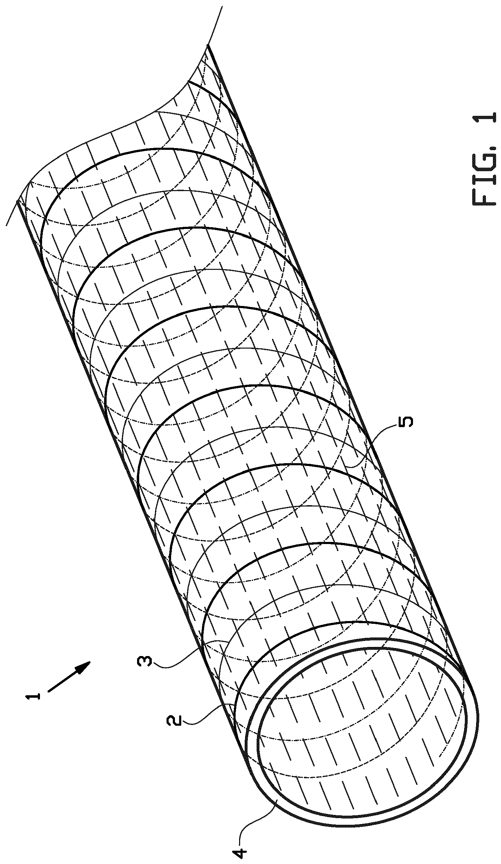

An example of air duct for use in accordance with the invention is shown in Fig.1. Such an air duct can be incorporated in an exemplary air system according to the invention between functional components and be used in accordance with the invention The following explanation is meant to illustrate the principle of the invention in accordance with an exemplary embodiment and not to limit the invention.

Fig 1 shows a perspective and schematic overview of part of an air duct 1. Air duct 1 comprises electrically conductive reinforcement wires 2, 3 integrated with the wall 4 and arranged in parallel coils distributed at a distance of each other along the pitch of the air duct 1. The air duct wall 4 comprises an electrical insulator material with electrically conductive fibers 5 distributed in the wall such that an electric field can be applied between consecutive wires 2 and 3. The reinforcement wires 2, 3 on their turn are configured as electrodes capable of forming an electric field over said fibers. For instance wire 2 can be configured as anode and wire 3 can be configured as cathode or vice versa. The wall 4 of air duct 1 comprises an electrical insulator material, for instance comprising or consisting of a non-woven fabric or a plastic. The wall 4 can be made a conductive composite material by the impregnation of conductive fibers 5, such as carbon fibers. The spiral arrangement of the reinforcements 2, 3 in combination with the fibers 5 results in large coverage of the duct wall. An electric field can be applied to the reinforcement 2, 3, which function as electrodes. Due to the impregnation of the wall 1 with electrically conductive fibers 5 , this results in uniform heating of the air duct 1 along the full length of the duct. In line with this, uniform heating and disinfection of air flowing in the air duct 1 can be obtained.

The inventors have found in this respect that when a voltage of 14 volt was applied over reinforcement wires 2, 3 integrated with a non-woven fabric, wherein in the non-woven fabric carbon fibers were distributed, the inner surface of the duct was uniformly heated to 28°C as compared to an ambient temperature of around 20 °C.

Although Fig.1 shows a symmetric air duct, an air duct for use in the context of the invention may also be asymmetric in cross-section depending on the wishes of the user, for instance elliptic or rectangular. Likewise the duct may be flexible or rigid. The duct may be provided with a connection element for easy connecting the ducts and other parts to obtain an air system in accordance with the invention.

## Claims

1. Air system comprising functional components and at least one air duct between said functional components, wherein said air duct has a wall, wherein said wall comprises an integrated electrically conductive element in connection with a voltage source and extending between functional components.

2. Air system according to claim 1, wherein electrically conductive fibers are integrated in said wall as electrically conductive element.

3. Air system according to claim 2, wherein said wall contains a layer of non-woven fabric impregnated with electrically conductive fibers so as to function as said electrically conductive element.

4. Air system according to claim 1 or 2, wherein said electrically conductive wall is made of a plastic impregnated with electrically conductive fibers so as to function as said electrically conductive element.

5. Air system according to any of the previous claims, wherein said air duct contains a reinforcement integrated with its wall, wherein an electrically conductive element is integrated with said reinforcement or wherein said reinforcement constitutes an electrically conductive element, preferably wherein said reinforcement is a spiral reinforcement.

6. Air system according to any of the claims 2 to 5, wherein the air duct comprises electrically conductive reinforcement wires integrated with the wall and arranged in parallel coils distributed at a distance of each other along the pitch of the air duct, wherein the air duct wall comprises electrically conductive fibers distributed in the wall, wherein the reinforcement wires are configured as electrodes capable of forming an electric field over said fibers.

7. Air system according to any of the claims 2 to 6, wherein said electrically conductive fibers are carbon fibers.

8. Air system according to any of the previous claims, wherein said electrically conductive element is configured for reducing heat transfer from the inside to the outside of said air duct or vice versa by means of electrical energy and/or for heating the air duct wall.

9. Air system according to any of the previous claims, wherein said functional components comprise a first functional component which is a control device and a second functional component which is configured to exert an action based on input from said control device via an electric signal submitted via said electrically conductive elements, preferably wherein said control device is configured to control multiple functional components to exert an action based on input from said control device via an electric signal submitted via said electrically conductive elements, even more preferably wherein said air system comprises a single control device configured to control multiple functional components to exert an action based on input from said control device via an electric signal submitted via said electrically conductive elements.

10. Air system according to claim 9, wherein said second functional component is a component that monitors the performance of a third functional component.

11. Air system according to claim 10, wherein said third component is a filter.

12. Air system according to any of the claims 9 - 11, wherein said second or third functional component is a valve that is controlled via said electrically conductive element by said control device.

13. Air system according to any of the previous claims, wherein said voltage source is configured to deliver a voltage of 24 volt or less, such as 14 volt or less, such as 12 volt or less.

14. Air system according to any of the previous claims, which is an air cleaning, heating, refrigeration, ventilation or air conditioning system in a building or means of transport.

15. Use of electrically conductive elements integrated with the wall of one or more air ducts of an air system, for insulation of walls of said air ducts, and/or for communication between functional components of an air system and/or control of functional components of an air system and/or heating of the air flowing through the air ducts.
